(19) Europäisches Patentamt
European Patent Office
Office européen des brevets

(11) Publication number: **0 489 924 A1**

(12) **EUROPEAN PATENT APPLICATION published in accordance with Art. 158(3) EPC**

(21) Application number: **91911362.1**

(51) Int. Cl.$^5$: **C09B 67/48**

(22) Date of filing: **20.06.91**

(86) International application number: **PCT/JP91/00826**

(87) International publication number: **WO 92/00356 (09.01.92 92/02)**

(30) Priority: **28.06.90 JP 168472/90**

(43) Date of publication of application: **17.06.92 Bulletin 92/25**

(84) Designated Contracting States: **CH DE GB LI**

(71) Applicant: **NIPPON KAYAKU KABUSHIKI KAISHA**
**11-2, Fujimi 1-chome Chiyoda-ku**
**Tokyo 102(JP)**

(72) Inventor: **TSUNODA, Mitsuaki, 10-2-21, Nishi Shiraokamachi**
**Minamisaitama-gun**
**Saitama-ken 349-02(JP)**

(74) Representative: **Türk, Gille, Hrabal**
**Brucknerstrasse 20**
**W-4000 Düsseldorf 13(DE)**

(54) **THERMALLY STABLE CRYSTAL MODIFICATION OF DYE AND PRODUCTION THEREOF.**

(57) A crystal modification of a dye represented by formula (I), characterized by an X-ray diffraction pattern having intense peaks at angles of diffraction, 2Θ, of 8.6, 24.7, 25.0 and 25.3 degrees and slightly intense peaks at angles of diffraction, 2Θ, of 4.9, 19.1, 21.5, 22.4, 23.1 and 26.2 degrees. It is thermally stable and excellent in dispersibility at high temperatures and gives a uniformly dyed article having excellent fastness even in dyeing at a temperature as high as 130 °C or above.

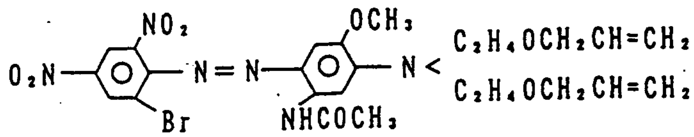

(I)

3.00

EP 0 489 924 A1

Fig. 1

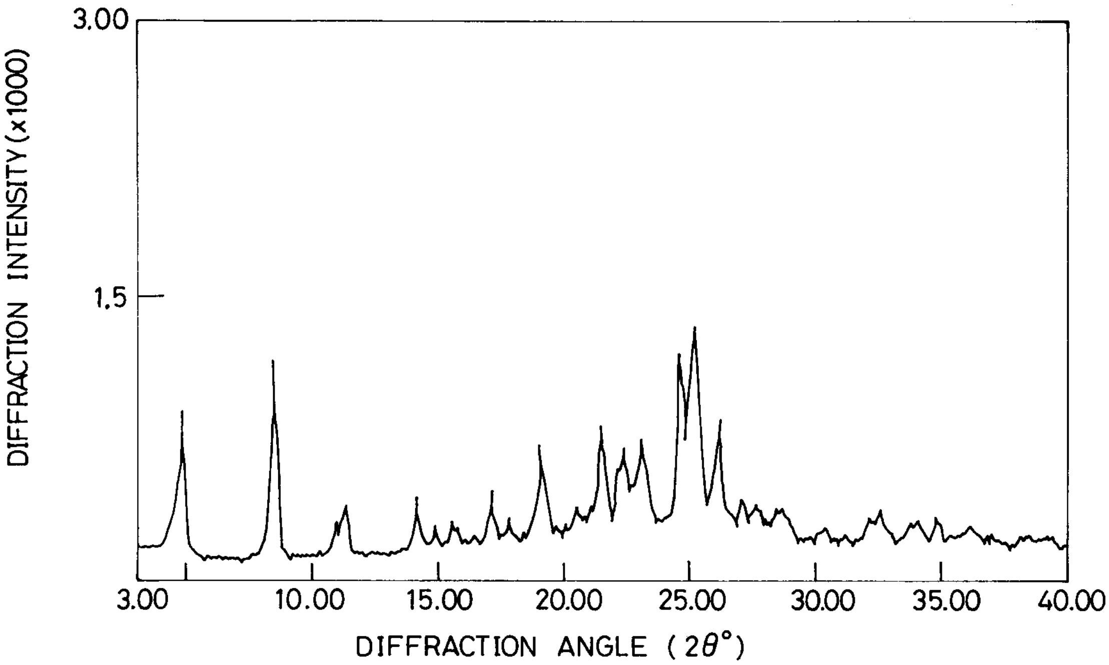
3.00
1.5
DIFFRACTION INTENSITY (x1000)
3.00
10.00
15.00
20.00
25.00
30.00
35.00
40.00
DIFFRACTION ANGLE (2θ°)

## Technical Field

The present invention relates to a heat-stable crystalline modification of a dye and a process for preparing the same.

## Background Art

A dye represented by the formula (I) has been known by Japanese Patent Publication (KOKOKU) No.61-37391(1986):

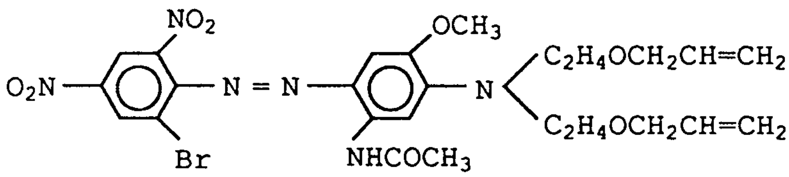

(I)

It is known that the dye represented by the formula (I) dyes a synthetic fiber, for example, a polyethylene terephthalate fiber, navy blue.

In recent years, rationalization of dyeing method and energy-saving measures have advanced in the dyeing industry and reduction of the bath ratio has been attempted. At the same time, use of dying methods such as Obermaier dyeing, cheese dying, beam dying and jet dying in which a dye liquor is circulated with the substrate to be dyed being held in a resting state has become frequent, but since such methods involve a problem of uneven dying caused by a filter effect, it has highly desired for a dye having an excellent dispersion stability at a high temperature in order to prevent this.

When the dye represented by the formula (I) and produced by an ordinary method is used for dying at a high temperature, there is a drawback that dispersion state of dye particles in a dye bath becomes poor, so that it is difficult to obtain a dyed material having a uniform dyeing depth. The heat-unstable crystalline form of the dye represented by the formula (I) (this will be hereinafter referred to as the α-crystal form) can be prepared according to a known method, by diazotizing 6-bromo-2,4-dinitroaniline and then coupling the diazotization product with 3-N,N-diallyloxyethylamino-4-methoxyacetanilide in an acid medium. It can be seen that the α-crystal form is in the so-called amorphous form, exhibiting, for example, a diffraction pattern with a gentle slope as shown in Fig. 2 in a Cu-Kα line diffractometry. When the dye in the α-crystal form is mechanically atomized together with dispersants, for example, a sodium salt of formalin condensates of naphthalenesulfonic acid or a sodium salt of lignin sulfonic acid, in a sand mill or the like according to a customary commercialization method and then applied to dyeing of a woven fabric of a polyester fiber or a blended woven fabric of a polyester fiber with an acrylic fiber, cotton or the like, since the α-crystal form is instable to heat, it makes dye particles tarry or forms agglomerates at a temperature of 95 to 135 ° C, at which a polyester fiber is dyed. The tarry substance and the bulked dye particles hinder uniform dyeing. In particular, in the case of Obermaier dyeing, cheese dyeing, beam dyeing, jet dyeing or the like, the agglomerated particle of the dye is filtered by a fiber layer and becomes causative of clogging, failure of internal penetration, and casing spots, which not only makes it impossible to attain uniform dyed material but also brings about a problem, for example, of lowering in the fastness of the dyed material.

The present inventors have made earnest studies with a view to eliminating the above-described drawbacks and, as a result, have found a crystalline form of the dye represented by the formula (I), which is stable to heat and very excellent in the dyeing stability at a high temperature. The present invention has been accomplished based on this finding.

## Disclosure of Invention

The present invention relates to a heat-stable crystalline form of the dye represented by the formula (I):

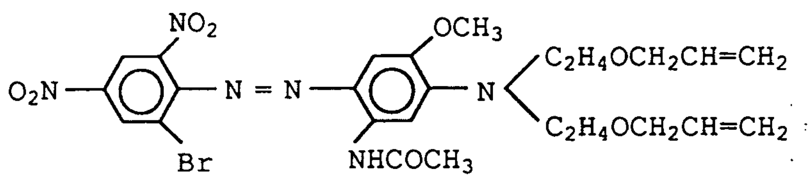

(I)

characterized by an X-ray diffraction pattern (Fig. 1) having strong peaks at the angles of diffraction ($2\theta$) [°] of 8.6, 24.7, 25.0 and 25.3 and relatively strong peaks at the angles of diffraction ($2\theta$) [°] of 4.9, 19.1, 21.5, 22.4, 23.1 and 26.2 according to X-ray powder diffractometry by a Cu-K$\alpha$ line (this will be hereinafter referred to as the $\beta$-crystal form) and a process for preparing the same. (An error within a usual range (±0.2) for an angle of diffraction is regarded as tolerable.)

The heat-unstable $\alpha$-crystal form of the dye represented by the formula (I) can be prepared according to the above-mentioned known method. That is, it can be obtain by diazotizing 6-bromo-2,4-dinitroaniline and coupling the diazotization product with 3-N,N-diallyloxyethylamino-4-methoxyacetanilide in an acid medium.

The $\beta$-crystal form of the dye represented by the formula (I), which is stable in the dyeing at a high temperature can be prepared by heating a wet cake or a dried cake of the $\alpha$-crystal form thus formed in water, a water-soluble organic solvent, a mixed solvent of water and a water-soluble organic solvent, or the solvent containing an anionic or nonionic surfactant at a temperature of 40°C or above. The solvent may be added preferably by 5 to 100 parts by weight based on one part by weight (dry basis) of the $\alpha$-crystal form. The treating time may be prolonged or shortened according to need. The $\alpha$-crystal form is transformed into the $\beta$-crystal form by, for example, heating at a temperature of 40 to 200°C, preferably 50 to 100°C for about 1 to 3 hr. Although further prolongation of the treating time brings about no problem, it is disadvantageous from the viewpoint of economy. It is preferred to add the water-soluble organic solvent usually by 5 to 50% by weight based on the water and the surfactant by 0.1 to 50% by weight based on water or the sum of water and the water-soluble organic solvent.

Crystal transformation from the $\alpha$-crystal form to the $\beta$-crystal form can be also conducted without by way of a filtration step, i.e., by heating the reaction solution after the coupling reaction as it is, by heating the reaction solution after adjusting pH to 3 to 6 with sodium hydroxide, sodium carbonate or sodium hydrogen carbonate, or by heating the reaction solution after adding a required amount of a water-soluble organic solvent and/or anionic or nonionic surfactant and adjusting pH in the same manner as described above, at a temperature higher than 40°C, preferably, 40 to 200°C and, more preferably, 50 to 100°C for about 1 to 3 hours. The water-soluble organic solvent or the surfactant may be added prior to the coupling reaction so long as it gives no undesired effect on the coupling reaction. In this case, crystal transformation from the $\alpha$-crystal form to the $\beta$-crystal form is also possible by adjusting the pH of the reaction solution in the same way as above after the completion of the coupling reaction and by applying a heat treatment as a relatively low temperature (for example, 15 to 40°C). It is preferred to add the water-soluble organic solvent usually by 5 to 50% by weight based on water and the surfactant by 0.1 to 50% by weight based on water or the sum of the water and the water-soluble organic solvent.

Examples of the water-soluble organic solvent usable herein can include lower alcohols such as methanol, ethanol, isopropyl alcohol and butyl alcohol, ethylene glycol monoalkyl ethers such as methyl cellosolve, ethyl cellosolve and butyl cellosolve, glycols such as ethylene glycol, ketones such as acetone and methyl ethyl ketone, and cyclic ethers such as tetrahydrofuran and dioxane. Further, examples of the anionic surfactant can include salts of $\beta$-naphthalenesulfonic acid-formalin condensates, and salts of ligninsulfonic acid, and examples of the nonionic surfactant can include sorbitan fatty acid esters, polyoxyethylene sorbitan fatty acid esters, polyoxyethylene alkyl ethers, polyoxyethylene alkylphenols and polyoxyethylene alkylamides. These may be used alone or in a combination of two or more of them.

Whether or not the desired crystal form transformation has been completed can be easily confirmed by X-ray diffraction spectroscopy.

Examples of the fibers which can be dyed with the dye having the $\beta$-crystal form of the present invention can include a polyethylene terephthalate fiber, and a blended spinning product or a blended woven fabric comprising the same and a natural fiber such as cotton, silk or wool.

For dyeing the fiber with the dye having the structure represented by the formula (I) and the $\beta$-crystal form according to present invention, a cake of the dye of $\beta$-crystal form is usually dispersed minutely in an aqueous medium in the presence of a dispersant such as salts of condensates of naphthalenesulfonic acid and formalin, an ester of a higher alcohol with sulfuric acid or a higher alkylbenzenesulfonate, to prepare a

dye bath or a printing paste, and dip dyeing or printing treatment can be conducted by using it. Dyeing is conducted usually at a pH 4 to 7 and at a temperature of 80 to 220 ° C. In the case of dip dyeing, the dye of the present invention can be applied, for example, to dyeing processes such as high temperature dyeing (120 to 140 ° C of dying temperature), e.g., Obermaier dyeing, cheese dyeing and beam dyeing method, carrier dyeing method (80 to 110 ° C of dying temperature) or thermosol dyeing method (180 to 220 ° C of dying temperature).

Upon conducting dying, it is possible to use the dye compound of the formula (I) having the β-crystal form according to the present invention in combination with other dye, or various compounding additives may be added in the step of preparing a disperse dye composition.

Brief Description of Drawings

Fig. 1 is an X-ray diffraction pattern of the heat-stable β-crystal form.

Fig. 2 is an X-ray diffraction pattern of the heat-unstable α-crystal form (amorphous). In Figs. 1 and 2, the abscissa represents an angle of diffraction (2θ), while the ordinate represents the intensity of diffraction.

Best Mode for Carrying Out the Invention

The present invention will now be described in more detail by way of examples but the present invention is not restricted to the following example unless it goes beyond the scope thereof.

Example 1

13.1 g of 2,4-dinitro-6-bromoaniline was added to 18.5 g of concentrated sulfuric acid and 16.2 g of 40 wt% nitrosylsulfuric acid, and stirred at 50 ° C ± 2 ° C for 2 hours to prepare a solution of diazotized 2,4-dinitro-6-bromoaniline.

Separately, 17.5 g of 3-diallyloxyethylamino-4-methoxyacetanilide was dissolved in 110 g of an 8 wt% aqueous sulfuric acid solution, and cooled to 0 ° C or below, to which the solution of the diazotization product prepared above was added dropwise to conduct coupling. After the completion of the reaction, it was neutralized with sodium carbonate to attain Congo Red neutrality, filtered and washed with water to recover 28.0 g (dry basis) of a cake of the dye compound. The X-ray diffraction pattern of the resultant dye compound was that for an amorphous α-crystal form as shown in Fig. 2.

Then the cake of the dye compound was dispersed in 500 ml of water and heat-treated at 70 to 75 ° C for one hour while stirring. After treatment, a cake of the dye compound was obtained by filtration. The cake of the dye compound was found to be β-crystal form showing the X-ray diffraction pattern as shown in Fig. 1, as a result of analysis by X-ray diffractometry.

Example 2

A mixture of 21 g (dry basis) of a wet cake of the dye compound of the α-crystal form prepared by the same method as that of Example 1, 21 g of a sodium salt of naphthalenesulfonic acid-formalin condensate (surfactant), 28 g of a sodium salt of naphthalenesulfonic acid-cresolsulfonic acid-formalin condensate (surfactant) and 300 g of water was heated at 70 to 75 ° C for one hour, and a portion thereof was filtered, washed with water and dried under a reduced pressure. The resultant dye compound had the same X-ray diffraction pattern as that shown in Fig. 1, and was found to be β-crystal form.

3 g of the dye composition obtained by grinding the above-described heat-treated solution with a sand grinder and spray-drying it was dispersed in 3 liters of water, and the pH was adjusted to 5 with acetic acid and sodium acetate to prepare a dye bath. 100 g of a Tetoron cloth was immersed in the dye bath and dyed at 130 ° C for 60 min. When it was subjected to soaping, washing with water and drying, a cloth uniformly dyed navy blue was obtained.

Example 3

The β-crystal form was obtained in the same procedure as that of Example 2, by using 7.5 g of Rheodol TW-O (polyoxyethylene sorbitan nonionic surfactant, manufactured by Kao Atlas Co., Ltd.) instead of the surfactant used for conversion of crystalline form in Example 2.

Example 4

The $\beta$-crystal form was obtained in the same procedure as that of Example 2, by using 30 g of ethylene glycol monomethyl ether instead of the surfactant used for conversion of crystalline form in Example 2.

Example 5

Coupling was conducted in the same manner as that of Example 1, and then the coupling solution was successively stirred at 70 to 75° for one hour. The crystal of the dye compound obtained by filtration and washing with water showed $\beta$-form.

Example 6

A solution of a diazotization product was prepared in the same manner as in Example 1. To a solution obtained by dissolving a predetermined coupler into an aqueous solution of sulfuric acid and, further, adding 1.25 g of Rheodol TW-O, the solution of the diazotization product was added dropwise at a temperature of 0°C or below to conduct coupling. After the completion of the addition, it was maintained at a temperature of 0 to 5°C for 2 hours and then neutralized with sodium carbonate to Congo Red neutrality. Further, after maintaining it at a temperature of 15 to 25°C for one hour, it was filtered and washed with water. The resultant crystal of the dye compound showed $\beta$-form.

Comparative Test

21 g of a dye compound having the $\alpha$-crystal form or the $\beta$-crystal form was subjected to wet grinding together with 21 g of a sodium salt of naphthalenesulfonic acid-formalin condensate and 28 g of a sodium salt of naphthalenesulfonic acid-cresolsulfonic acid-formalin condensate by means of a sand grind mill and, subsequently, it was dried in vacuo to prepare dispersed dye compositions, respectively.

(1) Heat agglomeration test and (2) casing spot test were conducted for comparison of the heat stability of each of the resultant dye compositions.

Details for each of the testing methods are as follows.

(1) Heat agglomeration test:

0.5 g of a dispersed dye composition was dispersed in 100 ml of water and pH was adjusted to 4.5 with acetic acid and sodium acetate to obtain a dye bath. The dye bath was heated from 60°C to 130°C over a period of 40 min without immersing a fiber (blank bath) and, after being maintained at 130°C for 10 min, cooled to 95°C within 5 min. The dye bath was subjected to suction filtration with a quantitative filter paper (Toyo filter paper No. 5A), and visual judgment was conducted based on the amount and the state of the residue remaining on the filter paper, according to the following five ratings of 5th grade (excellent) to 1st grade (poor).

5th grade: no residues were observed at all
4th grade: slight residues were observed
3rd grade: some residues were observed
2nd grade: considerable residues were observed
1st grade: residues were remarkable

(2) Casing spot test:

0.6 g of a dispersed dye composition was dispersed in 180 ml of water and pH was adjusted to 4.5 with acetic acid and sodium acetate to obtain a dye bath. 10 g of a Tetoron jersey was immersed in the dye bath and heated from 60°C to 130°C over a period of 40 min and, after being maintained at 130°C for 10 min, cooled to 60°C to complete dyeing. A color pet dying machine was used for the dyeing.

From the state of agglomerated dye adherent to that part where the substrate to be dyed was inscribed in a substrate holder, visual judgment was conducted according to the five ratings of 5th grade (excellent) to 1st grade (poor).

5th grade: no spots (uneven dying) due to agglomerates were caused at all
4th grade: slight spots (uneven dyeing) due to agglomerates were caused
3rd grade: some spots (uneven dying) due to agglomerates were caused
2nd grade: considerable spots (uneven dyeing) due to agglomerates were caused
1st grade: remarkable spots (uneven dyeing) due to agglomerates were caused.

The results of the heat agglomeration test and the casing spot test are shown in Table 1.

Table 1

| Crystal form | Heat agglomeration test | Casing spot test |
|---|---|---|
| β-crystal form | 5 | 4 |
| α-crystal form | 3 | 3 to 4 |

Industrial Applicability

The heat-stable crystalline form (β-crystal form) of the dye compound shown by the formula (I) according to the present invention exhibits an excellent dispersion stability also in dyeing at a high temperature and can provide a dyed product of a uniform dyeing depth. The β-crystal form of the dye compound is useful, in particular, to the dyeing of polyester that requires a high temperature.

## Claims

**1.** A crystalline form of the dye represented by the formula (I):

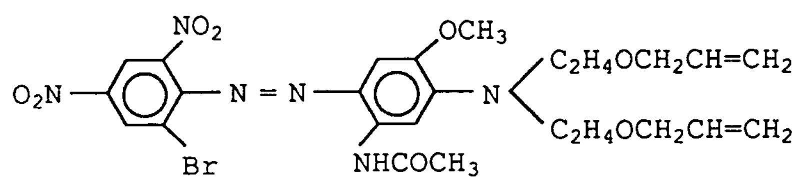

(I)

characterized by an X-ray diffraction pattern having strong peaks at the angles of diffraction ($2\theta$) [°] of 8.6, 24.7, 25.0 and 25.3 and relatively strong peaks at the angles of diffraction ($2\theta$) [°] of 4.9, 19.1, 21.5, 22.4, 23.1 and 26.2 according to X-ray powder diffractometry by a Cu-Kα line.

**2.** A process for preparing the crystalline form of the dye as defined in claim 1, wherein a heat-unstable crystalline form of a dye having the structure represented by the formula (I) of claim 1 is subjected to a heat treatment in a solvent selected from the group consisting of water, a water-soluble organic solvent and a mixed solvent of water and the water-soluble organic solvent in the presence or absence of an anionic or nonionic surfactant at a temperature of 40 ° C or above.

**3.** A process for preparing the crystalline form of the dye as defined in claim 1, wherein a diazotization product of 6-bromo-2,4-dinitroaniline and 3-N,N-diallyloxyethylamino-4-methoxyacetoanilide are subjected to coupling in an acid medium in the presence of a water-soluble organic solvent and/or a surfactant to obtain a heat unstable crystalline form of the dye having the structure represented by the formula (I) of claim 1, and then the coupling reaction solution is subjected to a heat treatment at a temperature of 15 to 40 ° C.

**4.** A process for preparing the crystalline form of the dye as defined in claim 2 or 3, wherein the solvent is used by 5 to 100 parts by weight based on one part by weight of the dye having the heat unstable crystalline form.

**5.** A process for preparing the crystalline form of the dye as defined in claim 2 or 3, wherein the water-soluble organic solvent is selected from the group consisting of lower alcohols, ethylene glycol monoalkyl ethers, glycols, ketones and cyclic ethers.

**6.** A process for preparing the crystalline form of the dye as defined in claim 2 or 3, wherein the anionic surfactant is selected from the group consisting of salts of β-naphthalenesulfonicacid-formalin conden-

sates, salts of naphthalenesulfonic acid-cresolsulfonic acid-formalin condensates and salts of ligninsulfonic acid.

**7.** A process for preparing the crystalline form of the dye as defined in claim 2 ore 3, wherein the nonionic surfactant is selected from the group consisting of sorbitan fatty acid esters, polyoxyethylene sorbitan fatty acid esters, polyoxyethylene alkyl ethers, polyoxyethylene alkylphenols and polyoxyethylene alkylamides.

Fig. 1

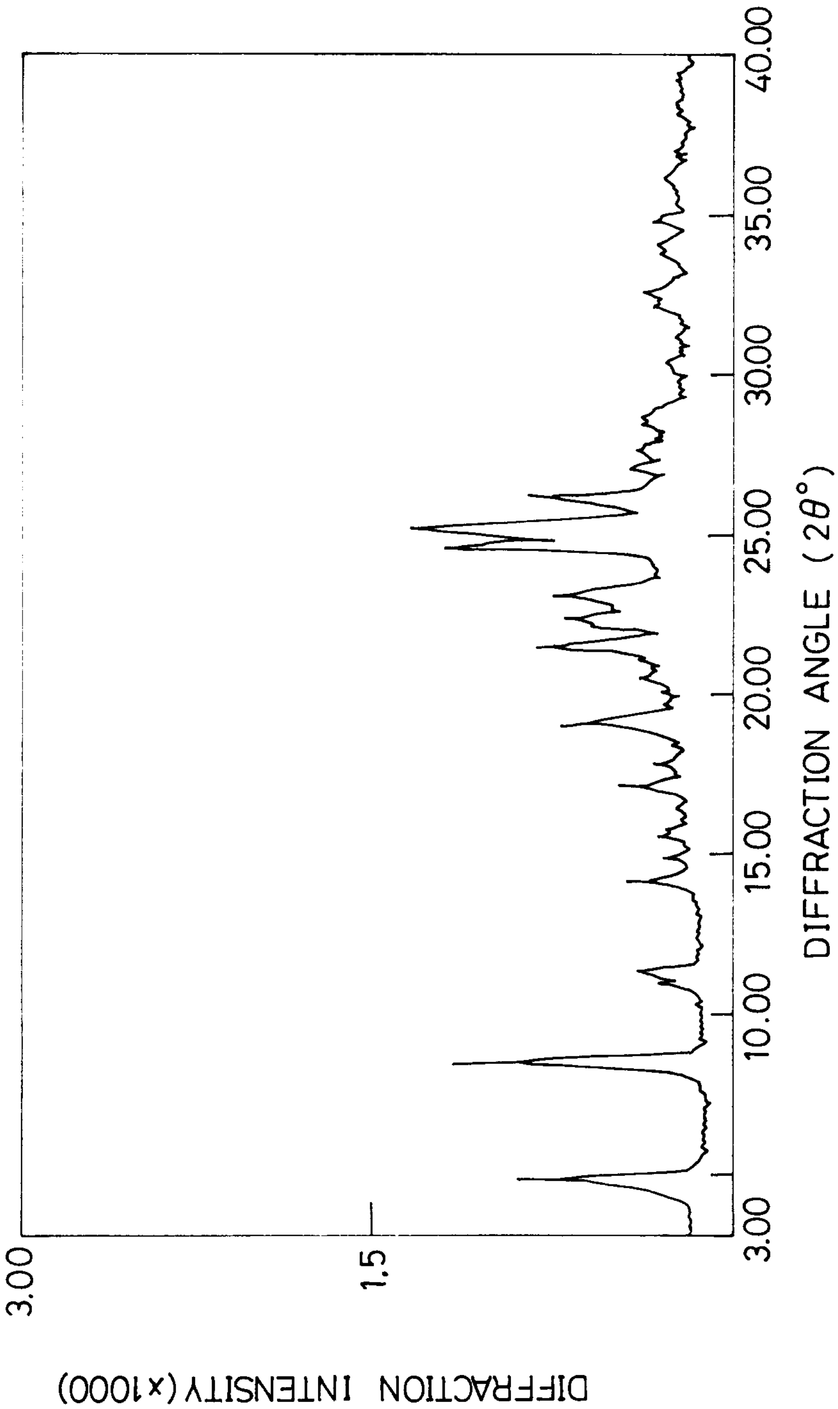
DIFFRACTION INTENSITY (x1000)
3.00
1.5
DIFFRACTION ANGLE (2θ°)
3.00
10.00
15.00
20.00
25.00
30.00
35.00
40.00

*Fig. 2*

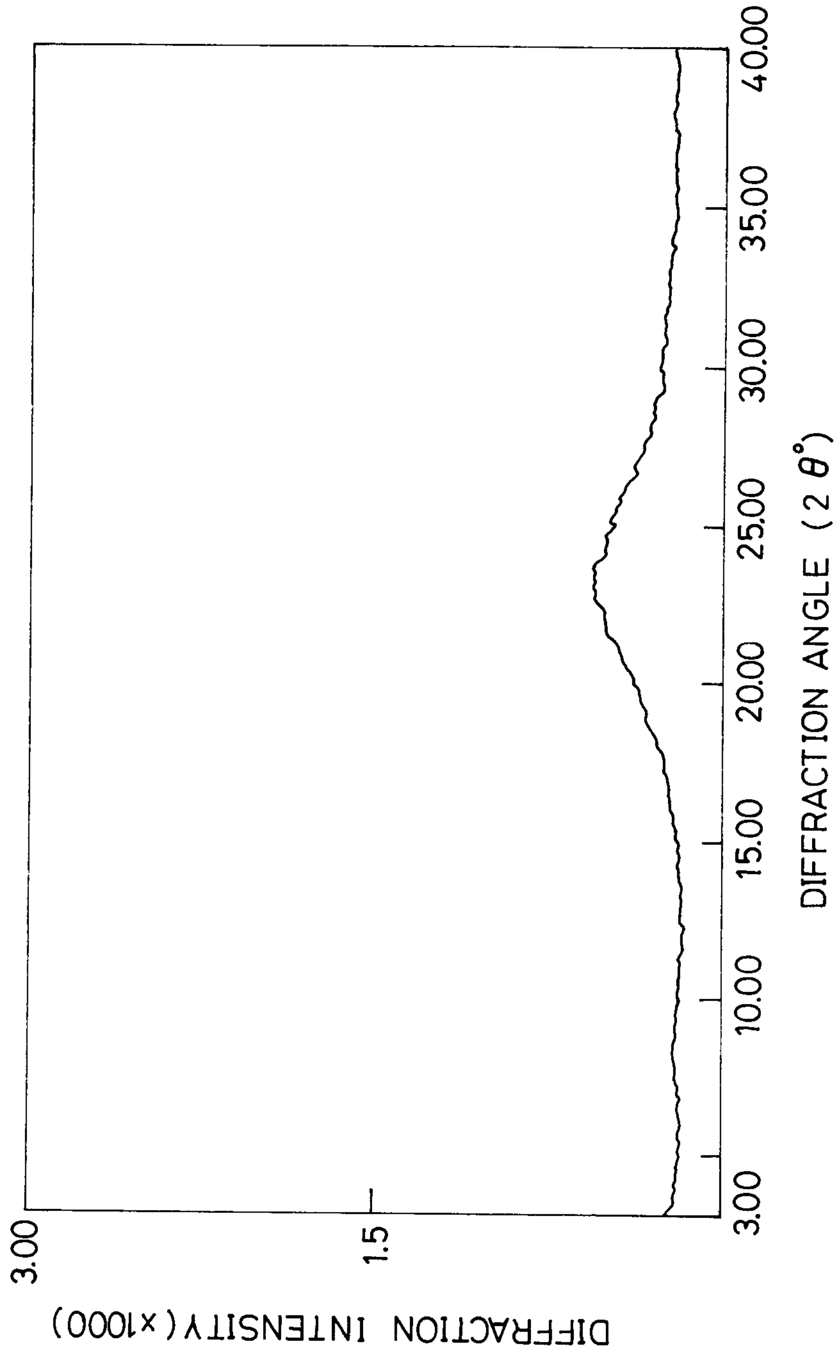
DIFFRACTION INTENSITY (x1000)
3.00
1.5
DIFFRACTION ANGLE (2 θ°)
3.00
10.00
15.00
20.00
25.00
30.00
35.00
40.00

# INTERNATIONAL SEARCH REPORT

International Application No PCT/JP91/00826

**I. CLASSIFICATION OF SUBJECT MATTER** (if several classification symbols apply, indicate all) [6]

According to International Patent Classification (IPC) or to both National Classification and IPC

Int. $Cl^5$ C09B67/48

**II. FIELDS SEARCHED**

Minimum Documentation Searched [7]

| Classification System | Classification Symbols |
|---|---|
| IPC | C09B29/085, C09B67/48 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 55-57076 (Nippon Kayaku Co., Ltd.), April 26, 1980 (26. 04. 80), (Family: none) | 1-7 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| August 28, 1991 (28. 08. 91) | September 2, 1991 (02. 09. 91) |
| **International Searching Authority** | **Signature of Authorized Officer** |
| Japanese Patent Office | |